# EUROPEAN PATENT APPLICATION

(11) **EP 3 750 692 A1**
(43) Date of publication of application: **16.12.2020**
(21) Application number: 20177937.8
(22) Date of filing: 03.06.2020
(51) Int. Cl.: B29C 64/386, H04N 1/387, B33Y 80/00

(54) **THREE-DIMENSIONAL OBJECT MANUFACTURING METHOD AND THREE-DIMENSIONAL OBJECT**

(30) Priority: 14.06.2019 JP 2019111141
(71) Applicant: Mimaki Engineering Co., Ltd., Tomi-city Nagano 389-0512 (JP)
(72) Inventor: NOZAKI, Kazuya, Nagano, 389-0512 (JP); NAKAMURA, Norikazu, Nagano, 389-0512 (JP); IKEDA, Akira, Nagano, 389-0512 (JP)
(74) Representative: Becker, Eberhard

(57) **Abstract**

A three-dimensional object manufacturing method includes steps of: generating, based on three-dimensional data of a three-dimensional object, two-dimensional data for a two-dimensional printed matter in which at least a part of an image appearing on a surface of the three-dimensional object is printed on a medium, and three-dimensional data of a three-dimensional shaped object that includes an attachment groove to which inside the two-dimensional printed matter is attached and forms the three-dimensional object when the two-dimensional printed matter is attached inside the attachment groove (S102); generating the two-dimensional printed matter by a two-dimensional printer based on the two-dimensional data generated in S102 (S103); generating the three-dimensional shaped object by a three-dimensional printer based on three-dimensional data generated in S102 (S104); and generating the three-dimensional object by attaching the two-dimensional printed matter generated in S103 to the inside of the attachment groove of the three-dimensional shaped object generated in S104 (S105).

## Description

### TECHNICAL FIELD

The present disclosure relates to a three-dimensional object manufacturing method for manufacturing a three-dimensional object and a three-dimensional object.

### DESCRIPTION OF THE BACKGROUND ART

As a conventional three-dimensional object, a three-dimensional object that is shaped in full color by an inkjet type three-dimensional printer that uses an ultraviolet-curable ink is known (see, e.g., Japanese Unexamined Patent Publication No. 2016-064539, i.e., Patent Literature 1).

Patent Literature 1: Japanese Unexamined Patent Publication No. 2016-064539

### SUMMARY

When executing printing on a medium in full color using an inkjet type two-dimensional printer that uses an ultraviolet-curable ink, the entire surface of the medium does not need to be filled with ink, and hence an appropriate speed that is not too slow for the printing speed can be obtained even if ink dots ejected from the inkjet head are reduced to less than a specific size.

On the other hand, when shaping a three-dimensional object in full color by an inkjet type three-dimensional printer using an ultraviolet-curable ink, a plurality of ink layers are stacked to shape a three-dimensional object, and thus the entire surface needs to be filled with ink for every ink layer to form each ink layer to a thickness of greater than or equal to a specific thickness. Thus, in order to obtain an appropriate speed that is not too slow for the shaping speed of a three-dimensional object, it is necessary to increase the size of the ink dots ejected from the inkjet head to greater than or equal to a specific size.

Therefore, when shaping a three-dimensional object in full color using an inkjet type three-dimensional printer that uses an ultraviolet-curable ink, the possibility the ink dots ejected from the inkjet head are large is high and the possibility the image quality of the image formed by the ink is low is high, as compared with a case when printing is executed on a medium in full color using the inkjet type two-dimensional printer that uses the ultraviolet-curable ink.

Furthermore, when shaping a three-dimensional object in full color by an inkjet type three-dimensional printer that uses an ultraviolet-curable ink, unnecessary ink on the surface of the ink layer is removed by a member that comes into contact with the surface of the ink layer to perform flattening for every ink layer, and the image quality of the image formed by the ink lowers by such flattening.

As described above, the conventional three-dimensional object has a problem in that the image quality of an image appearing on the surface is lower than the image quality of an image printed on a medium by a two-dimensional printer.

The present disclosure thus provides a three-dimensional object manufacturing method and a three-dimensional object capable of improving the image quality of at least a part of an image appearing on the surface of the three-dimensional object.

A three-dimensional object manufacturing method according to the present disclosure includes: a data generating step of generating, based on three-dimensional data of a three-dimensional object, a two-dimensional data for a two-dimensional printed matter in which at least a part of an image appearing on a surface of the three-dimensional object is printed on a medium, and a three-dimensional data of a three-dimensional shaped object that includes a shaped object side engagement portion serving as an engagement portion that engages with a printed matter side engagement portion serving as an engagement portion in the two-dimensional printed matter in a positioning state and configures the three-dimensional object when the printed matter side engagement portion is engaged with the shaped object side engagement portion; a two-dimensional printed matter generating step of generating the two-dimensional printed matter by a two-dimensional printer based on the two-dimensional data generated by the data generating step; a three-dimensional shaped object generating step of generating the three-dimensional shaped object by a three-dimensional printer based on the three-dimensional data generated by the data generating step; and a three-dimensional object generating step of generating the three-dimensional object by engaging the printed matter side engagement portion of the two-dimensional printed matter generated by the two-dimensional printed matter generating step to the shaped object side engagement portion of the three-dimensional shaped object generated by the three-dimensional shaped object generating step.

According to such configuration, the three-dimensional object manufacturing method of the present disclosure generates a two-dimensional printed in which at least a part of an image appearing on the surface of the three-dimensional object is printed on a medium with a two-dimensional printer, generates a three-dimensional shaped object including a shaped object side engagement portion that engages with a printed matter side engagement portion of the two-dimensional printed matter in a positioning state with a three-dimensional printer. and generates a three-dimensional object by engaging the printed matter side engagement portion of the two-dimensional printed matter with the shaped object side engagement portion of the three-dimensional shaped object, and thus the image quality of at least a part of the image appearing on the surface of the three-dimensional object can be improved as compared with a case where the entire three-dimensional object is generated with the three-dimensional printer.

In the three-dimensional object manufacturing method of the present disclosure, when the shaped object side engagement portion engages with the printed matter side engagement portion, a position in at least one of a plane direction and an orthogonal direction orthogonal to the plane direction with respect to the three-dimensional shaped object of the two-dimensional printed matter may be positioned.

In the three-dimensional object manufacturing method according to the present disclosure, the shaped object side engagement portion may be a groove extending in parallel with the plane direction, and may engage with the printed matter side engagement portion inside the groove.

In the three-dimensional object manufacturing method of the present disclosure, the groove may have a shape that lies along an entire periphery of an outline of the two-dimensional printed matter, and may be formed in a shape in which the entire periphery of the outline is hidden inside the groove when the three-dimensional object is viewed from the orthogonal direction.

According to such configuration, the three-dimensional object manufacturing method according to the present disclosure can suppress lowering of designability of the three-dimensional object that occurs when the outline of the two-dimensional printed matter is viewed since the entire periphery of the outline of the two-dimensional printed matter is hidden inside the groove of the three-dimensional shaped object.

In the three-dimensional object manufacturing method of the present disclosure, the three-dimensional shaped object may include a positioning portion having a shape that corresponds to a shape of at least a part of the shape of the two-dimensional printed matter for positioning the printed matter side engagement portion with respect to the shaped object side engagement portion.

According to such configuration, the three-dimensional object manufacturing method of the present disclosure can position the printed matter side engagement portion of the two-dimensional printed matter with respect to the shaped object side engagement portion of the three-dimensional shaped object by the positioning portion of the three-dimensional shaped object, and thus the printed matter side engagement portion of the two-dimensional printed matter can be easily positioned with respect to the shaped object side engagement portion of the three-dimensional shaped object.

In the three-dimensional object manufacturing method according to the present disclosure, the three-dimensional shaped object may include an end cover portion that covers at least a part of an end of the two-dimensional printed matter in which the printed matter side engagement portion is engaged with the shaped object side engagement portion.

According to such configuration, the three-dimensional object manufacturing method according to the present disclosure can suppress lowering of designability of the three-dimensional object that occurs when the end of the two-dimensional printed matter is viewed since at least a part of the end of the two-dimensional printed matter is covered by the end cover portion of the three-dimensional shaped object.

A three-dimensional object of the present disclosure is a three-dimensional object including a two-dimensional printed matter in which at least a part of an image appearing on a surface of the three-dimensional object is printed on a medium; and a three-dimensional shaped object including a shaped object side engagement portion serving as an engagement portion that engages with a printed matter side engagement portion serving as an engagement portion in the two-dimensional printed matter in a positioning state. The two-dimensional printed matter has the printed matter side engagement portion engaged with the shaped object side engagement portion. The three-dimensional shaped object includes a positioning portion having a shape that corresponds to a shape of at least a part of the two-dimensional printed matter for positioning the printed matter side engagement portion with respect to the shaped object side engagement portion.

According to this configuration, the three-dimensional object of the present disclosure is generated by engaging the printed matter side engagement portion of the two-dimensional printed matter in which at least a part of the image appearing on the surface of the three-dimensional object is printed on the medium with the shaped object side engagement portion of the three-dimensional shaped object, and thus the image quality of at least a part of the image appearing on the surface of the three-dimensional object can be improved as compared with a case where the entire three-dimensional object is generated by the three-dimensional printer. Furthermore, since the three-dimensional object of the present disclosure can position the printed matter side engagement portion of the two-dimensional printed matter with respect to the shaped object side engagement portion of the three-dimensional shaped object side engagement portion by the positioning portion of the three-dimensional shaped object, the printed matter side engagement portion of the two-dimensional printed matter can be easily positioned with respect to the shaped object side engagement portion of the three-dimensional shaped object.

The three-dimensional object manufacturing method and the three-dimensional object of the present disclosure can improve the image quality of at least a part of the image appearing on the surface of the three-dimensional object.

### BRIEF DESCRIPTION OF THE DRAWINGS

FIG. 1 is a block diagram of a three-dimensional object manufacturing system according to one embodiment of the present disclosure.
FIG. 2 is a block diagram of a computer shown in FIG. 1.
FIG. 3 is an external perspective view of a two-dimensional printer shown in FIG. 1.
FIG. 4 is a block diagram of the two-dimensional printer shown in FIG. 3.
FIG. 5 is a schematic front view of a part of a three-dimensional printer shown in FIG. 1.
FIG. 6 is a schematic side view of a part of the three-dimensional printer shown in FIG. 5.
FIG. 7 is a block diagram of the three-dimensional printer shown in FIG. 5.
FIG. 8 is a flowchart of a three-dimensional object manufacturing method using the three-dimensional object manufacturing system shown in FIG. 1.
FIG. 9 is an external perspective view of an example of a three-dimensional object represented by three-dimensional data used in the three-dimensional object manufacturing method shown in FIG. 8.
FIG. 10 is a front view of an example of a two-dimensional printed matter generated based on the three-dimensional data of the three-dimensional object shown in FIG. 9.
FIG. 11A is a plan view of an example of a three-dimensional shaped object generated based on the three-dimensional data of the three-dimensional object shown in FIG. 9.
FIG. 11B is a front cross-sectional view of the three-dimensional shaped object shown in FIG. 11A.
FIG. 12A is a plan view of a three-dimensional object generated by attaching the two-dimensional printed matter shown in FIG. 10 inside an attachment groove of the three-dimensional shaped object shown in FIG. 11A and FIG. 11B.
FIG. 12B is a front cross-sectional view of the three-dimensional object shown in FIG. 12A.
FIG. 13 is a front cross-sectional view of an example different from the example shown in FIG. 12A and FIG. 12B, of a three-dimensional object generated by attaching a two-dimensional printed matter inside the attachment groove of the three-dimensional shaped object.

### DETAILED DESCRIPTION OF EMBODIMENTS

Hereinafter, one embodiment of the present disclosure will be described with reference to the drawings.

First, a configuration of a three-dimensional object manufacturing system according to an embodiment of the present disclosure will be described.

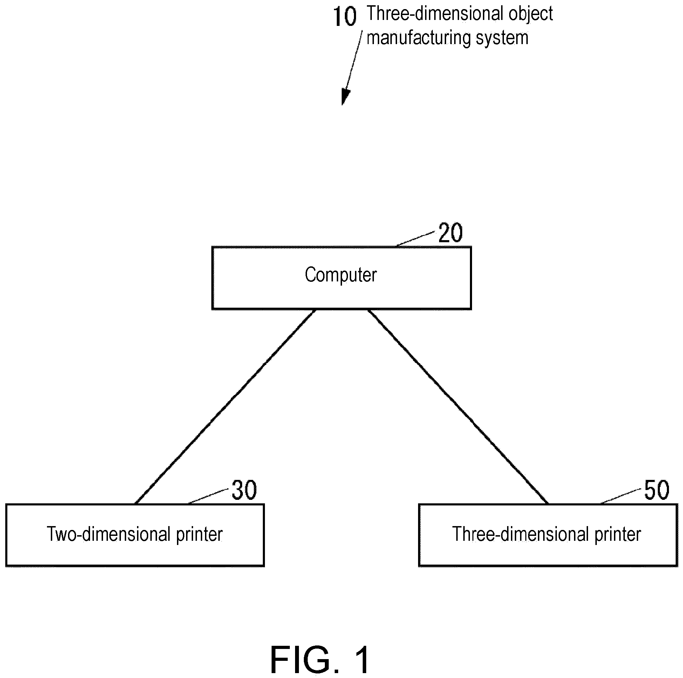

FIG. 1 is a block diagram of a three-dimensional object manufacturing system 10 according to the present embodiment.

As shown in FIG. 1, the three-dimensional object manufacturing system 10 includes, for example, a computer 20 such as a personal computer (PC) for generating two-dimensional data for a two-dimensional printed matter and three-dimensional data for a three-dimensional shaped object from three-dimensional data of a three-dimensional object, a two-dimensional printer 30 capable of printing in full color, and a three-dimensional printer 50 capable of shaping in full color.

The computer 20 and the two-dimensional printer 30 and the three-dimensional printer 50 are communicably connected directly in a wired or wireless manner through a network such as a local area network (LAN), the Internet, or the like or without the network.

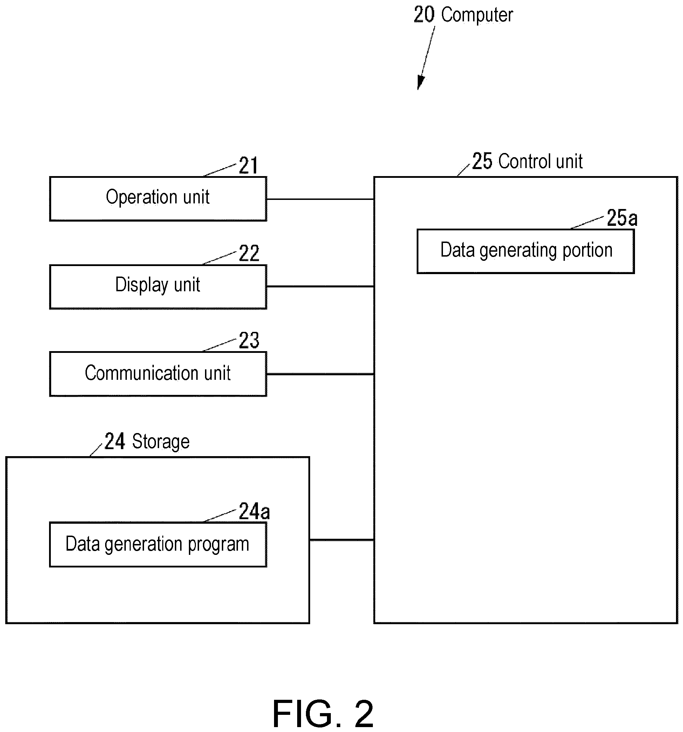

FIG. 2 is a block diagram of the computer 20.

As shown in FIG. 2, the computer 20 includes an operation unit 21 which is an input device such as, for example, a keyboard and a mouse to which various operations are input, a display unit 22 which is a display device such as a Liquid Crystal Display (LCD) that displays various information, a communication unit 23 which is a communication device that communicates with an external device directly in a wired or wireless manner through a network or without a network, a storage 24 which is a nonvolatile storage device such as, for example, a semiconductor memory and a Hard Disk Drive (HDD) that stores various information, and a control unit 25 that controls the entire computer 20.

The storage 24 stores a data generation program 24a for generating two-dimensional data for a two-dimensional printed matter and three-dimensional data of a three-dimensional shaped object from three-dimensional data of a three-dimensional object. For example, the data generation program 24a may be installed in the computer 20 at the time of manufacturing of the computer 20, may be additionally installed in the computer 20 from an external storage medium such as a Universal Serial Bus (USB) memory, a Compact Disk (CD), or a Digital Versatile Disk (DVD), or may be additionally installed in the computer 20 from the network.

The control unit 25 includes, for example, a central processing unit (CPU), a read only memory (ROM) that stores programs and various data, and a random access memory (RAM) used as a work region of the CPU of the control unit 25. The CPU of the control unit 25 executes the program stored in the ROM of the control unit 25 or the storage 24.

The control unit 25 executes the data generation program 24a to realize data generating portion 25a that generates the two-dimensional data for the two-dimensional printed matter and the three-dimensional data of the three-dimensional shaped object from the three-dimensional data of the three-dimensional object.

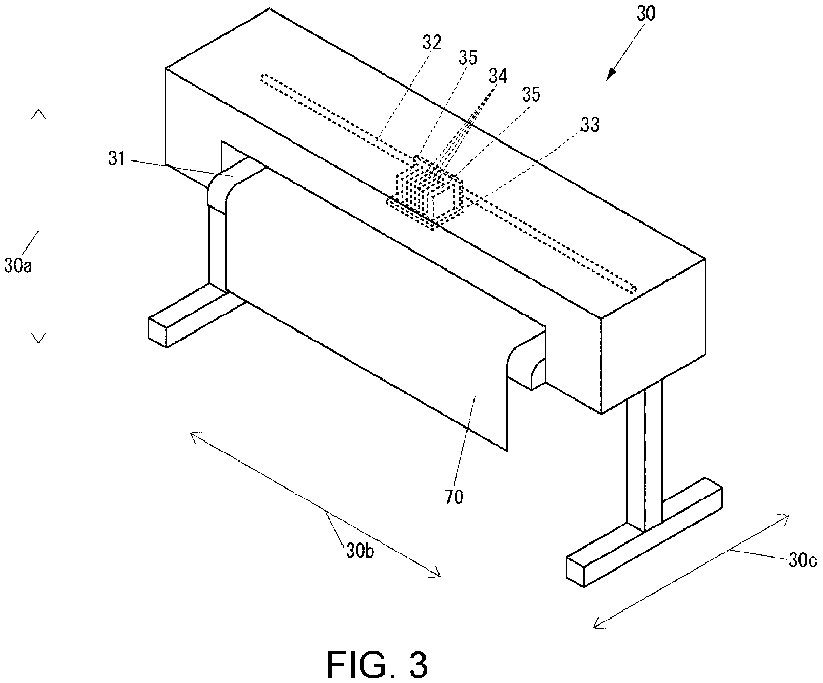

FIG. 3 is an external perspective view of the two-dimensional printer 30.

As shown in FIG. 3, the two-dimensional printer 30 includes a platen 31 that supports the medium 70 from the lower side in a vertical direction indicated by an arrow 30a, a guide rail 32 disposed on an upper side in the vertical direction with respect to the platen 31 and extending in a left-right direction indicated by an arrow 30b orthogonal to the vertical direction, a carriage 33 which movement in the left-right direction is guided by the guide rail 32, a plurality of inkjet heads 34 that eject ink toward the medium 70 supported by the platen 31, and a plurality of light irradiators 35 for irradiating light toward the ink attached to the medium 70 supported by the platen 31.

The carriage 33 has the inkjet head 34 and the light irradiator 35 mounted thereon.

The inkjet head 34 can eject ink from a plurality of nozzles (not shown) arranged in the front-rear direction indicated by an arrow 30c orthogonal to both the vertical direction and the left-right direction. The ink ejected by the inkjet head 34 is an ink that cures by being irradiated with light by the light irradiator 35, and is, for example, an ultraviolet-curable ink.

The light irradiator 35 is, for example, a device that irradiates ultraviolet light with a Light Emitting Diode (LED).

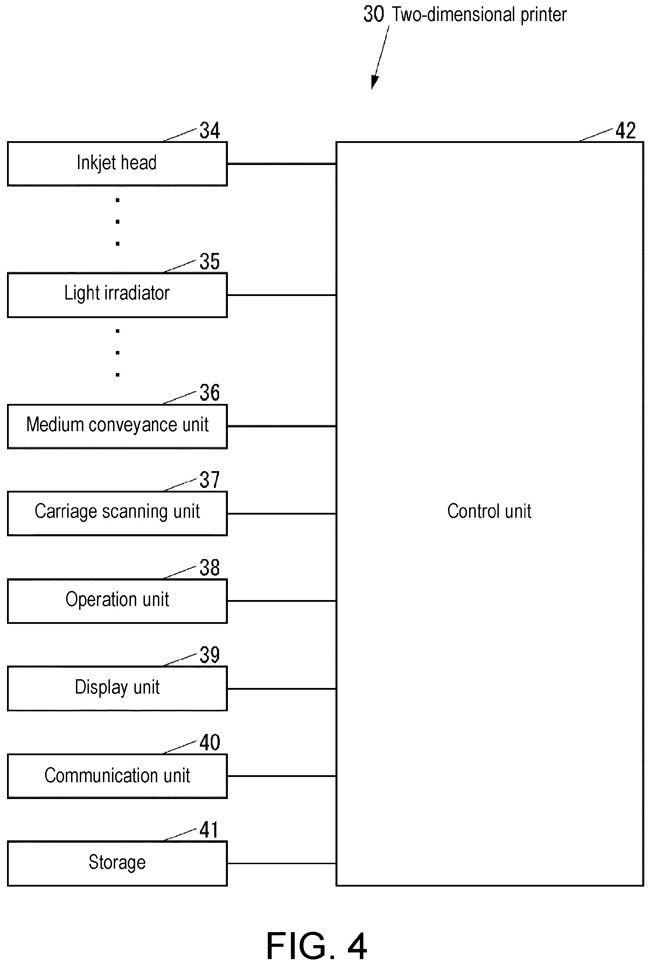

FIG. 4 is a block diagram of the two-dimensional printer 30.

As shown in FIG. 4, the two-dimensional printer 30 includes a plurality of inkjet heads 34, a plurality of light irradiators 35, a medium conveyance unit 36 that conveys a medium 70 (see FIG. 3) in the front-rear direction, a carriage scanning unit 37 that moves the carriage 33 (see FIG. 3) relative to the platen 31 (see FIG. 3) in the left-right direction along the guide rail 32 (see FIG. 3), an operation unit 38 that is an input device such as a button, for example, to which various operations are input, a display unit 39 that is a display device such as an LCD that displays various information, a communication unit 40 that is a communication device that communicates with an external device directly in a wired or wireless manner through a network or without a network, a storage 41 that is a non-volatile storage device such as a semiconductor memory and HDD that stores various types of information, and a control unit 42 that controls the entire two-dimensional printer 30.

The control unit 42 includes, for example, a CPU, a ROM that stores programs and various types of data, and a RAM that is used as a work region for the CPU. The CPU executes the program stored in the ROM or the storage 41.

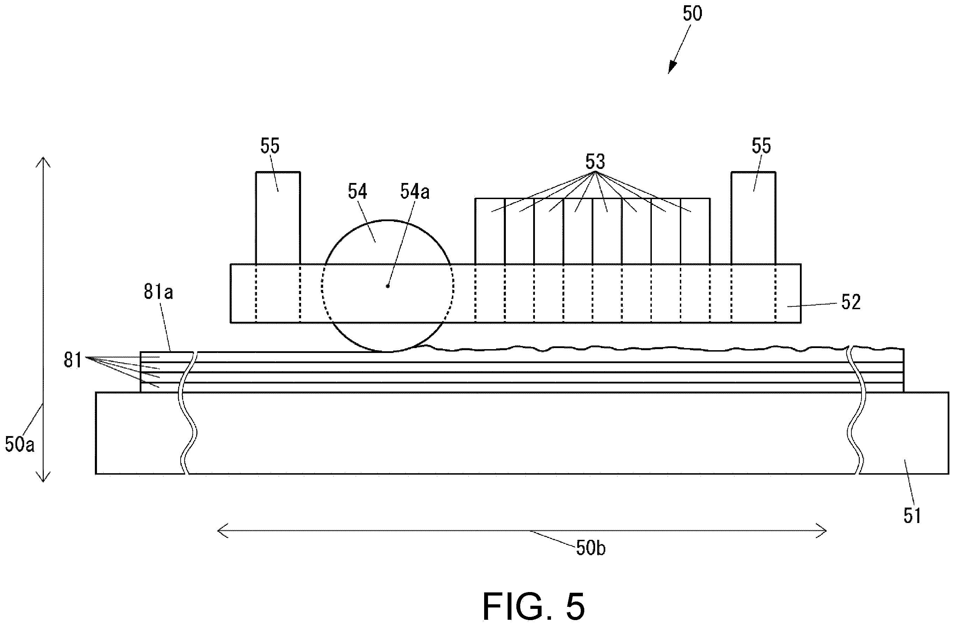

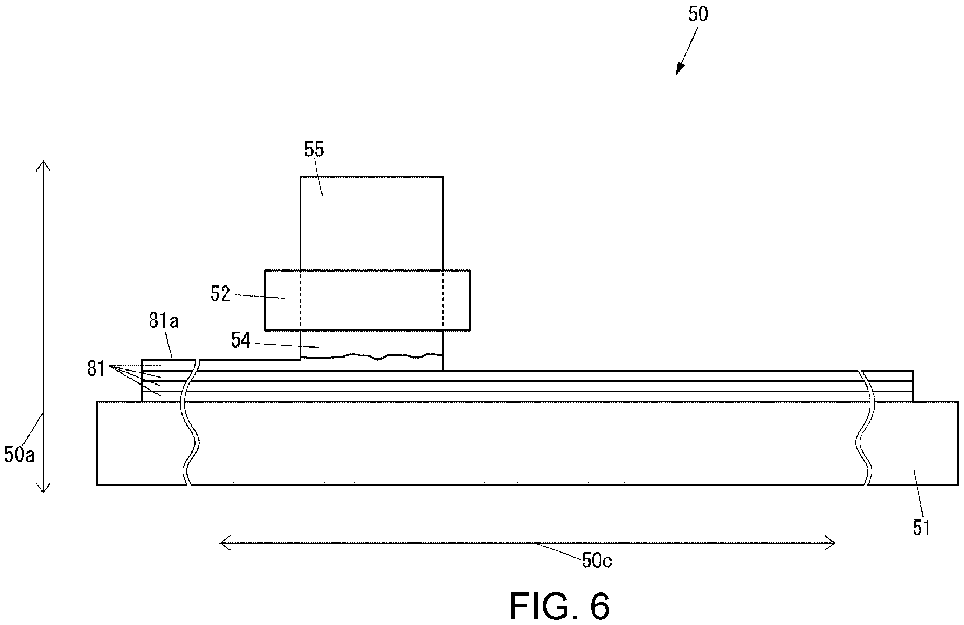

FIG. 5 is a schematic front view of a part of the three-dimensional printer 50. FIG. 6 is a schematic side view of a part of the three-dimensional printer 50.

As shown in FIGs. 5 and 6, the three-dimensional printer 50 includes a shaping table 51 serving as a table of a three-dimensional shaped object when the three-dimensional shaped object is manufactured, a carriage 52 disposed on an upper side of the shaping table 51 in a vertical direction indicated by an arrow 50a and being movable in a left-right direction indicated by an arrow 50b orthogonal to the vertical direction, a plurality of inkjet heads 53 that eject an ultraviolet-curable ink toward a lower side in the vertical direction to form an ink layer 81, a flattening roller 54 serving as a flattening mechanism that flattens a surface 81a of the ink layer 81 by removing a part on the surface 81a side of the ink layer 81 formed by the inkjet heads 53 and adjusts a thickness of the ink layer 81 to a specific thickness, and a plurality of ultraviolet irradiators 55 that irradiate ultraviolet light toward the ink layer 81 flattened by the flattening roller 54. The three-dimensional printer 50 is an apparatus that layers and stacks the ink layers 81 formed by ink in the vertical direction to ultimately manufacture the entire three-dimensional shaped object.

The shaping table 51 is movable in the vertical direction with respect to the carriage 52, and is also movable with respect to the carriage 52 in a front-rear direction indicated by an arrow 50c orthogonal to both the vertical direction and the left-right direction.

The inkjet head 53, the flattening roller 54, and the ultraviolet irradiator 55 are mounted on the carriage 52.

The inkjet head 53 ejects ink from a plurality of nozzles (not shown) arranged in the front-rear direction.

The flattening roller 54 is extended in the front-rear direction, and is mounted on the carriage 52 in a state rotatable about a center axis 54a extending in the front-rear direction.

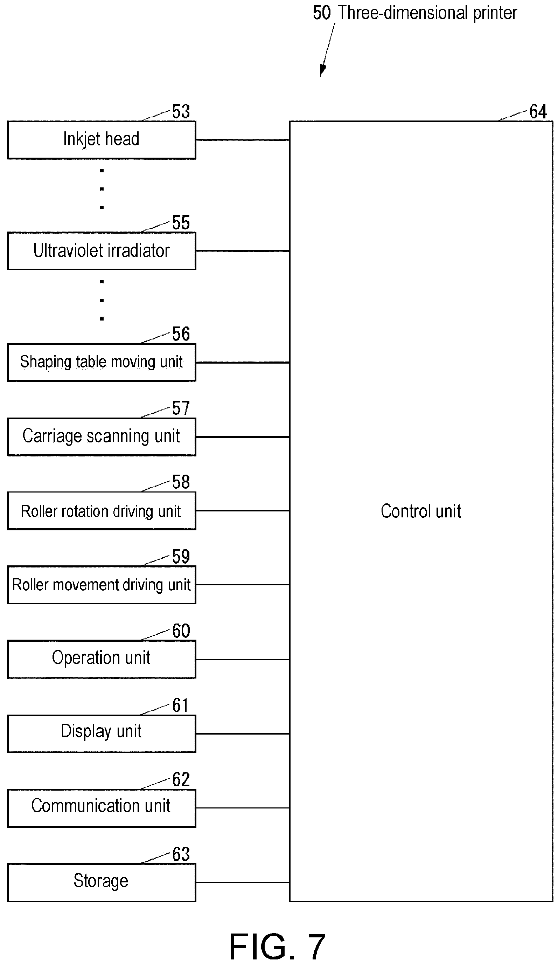

FIG. 7 is a block diagram of the three-dimensional printer 50.

As shown in FIG. 7, the three-dimensional printer 50 includes a plurality of inkjet heads 53, a plurality of ultraviolet irradiators 55, a shaping table moving unit 56 that moves the shaping table 51 (see FIG. 5), a carriage scanning unit 57 that moves the carriage 52 (see FIG. 5), a roller rotation driving unit 58 that rotates the flattening roller 54 about the center axis 54a (see FIG. 5) of the flattening roller 54 (see FIG. 5), a roller movement driving unit 59 that moves the flattening roller 54 in the vertical direction, an operation unit 60 that is an input device such as a button, for example, to which various operations are input, a display unit 61 that is a display device such as an LCD that displays various information, a communication unit 62 that is a communication device that communicates with an external device directly in a wired or wireless manner through a network or without a network, a storage 63 that is a non-volatile storage device such as a semiconductor memory and HDD that stores various types of information, and a control unit 64 that controls the entire three-dimensional printer 50.

The shaping table moving unit 56 can move the shaping table 51 in the vertical direction and in the front-rear direction.

The carriage scanning unit 57 can move the carriage 52 in the left-right direction.

The roller movement driving unit 59 lowers the flattening roller 54 when the ink layer 81 is flattened by the flattening roller 54, and raises the flattening roller 54 when the ink layer 81 is not flattened by the flattening roller 54.

The control unit 64 includes, for example, a CPU, a ROM that stores programs and various data, and a RAM that is used as a work region for the CPU of the control unit 64. The CPU of the control unit 64 executes the program stored in the ROM of the control unit 64 or the storage 63.

Next, a three-dimensional object manufacturing method using the three-dimensional object manufacturing system 10 will be described.

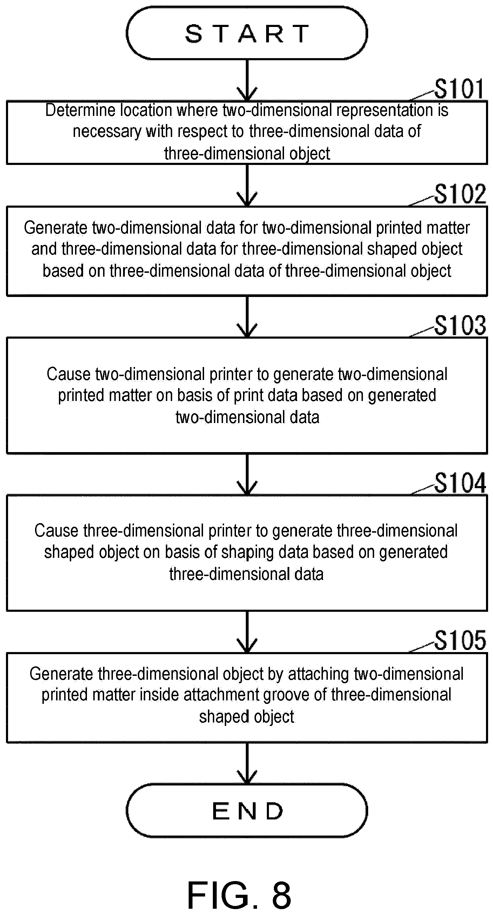

FIG. 8 is a flowchart of a three-dimensional object manufacturing method using the three-dimensional object manufacturing system 10.

As shown in FIG. 8, the operator uses the data generation program 24a of the computer 20 to determine, with respect to the three-dimensional data of the three-dimensional object, a location including at least a part of the image appearing on the surface of the three-dimensional object as a location that requires two-dimensional representation (S101). At this time, the data generating portion 25a displays the three-dimensional object on the display unit 22 based on the three-dimensional data of the three-dimensional object.

After the process of S101, the operator generates the two-dimensional data for the two-dimensional printed matter in which the image of the location determined in S101 is printed on the medium as a location that requires two-dimensional representation, and the three-dimensional data of the three-dimensional shaped object that includes an attachment groove which is a groove for attaching the two-dimensional printed matter in the inside and forms a three-dimensional object by attaching the two-dimensional printed matter inside the attachment groove based on the three-dimensional data of the three-dimensional object using the data generation program 24a of the computer 20 (S102). That is, the data generating portion 25a generates the two-dimensional data for the two-dimensional printed matter and the three-dimensional data of the three-dimensional shaped object based on the three-dimensional data of the three-dimensional object according to an instruction through the operation unit 21.

After the process of S102, the operator instructs the computer 20 through the operation unit 21 to cause the two-dimensional printer 30 to generate a two-dimensional printed matter based on the print data on the basis of the two-dimensional data generated in S102 (S103). Therefore, the control unit 25 of the computer 20 generates print data based on the two-dimensional data generated in S102, and transmits the print data to the two-dimensional printer 30. Then, the two-dimensional printer 30 generates a two-dimensional printed matter based on the print data transmitted from the computer 20.

Here, generation of a two-dimensional printed matter by the two-dimensional printer 30 will be described.

Upon receiving the print data through the communication unit 40, the control unit 42 of the two-dimensional printer 30 executes printing on the medium 70 based on the print data received through the communication unit 40. That is, the control unit 42 moves the carriage 33 in the left-right direction by the carriage scanning unit 37 to eject ink toward the medium 70 by the inkjet head 34, and irradiates the ink attached to the medium 70 with light from the light irradiator 35 to execute printing on the medium 70 in the left-right direction. Furthermore, when executing printing on the medium 70 in the left-right direction, the control unit 42 transports the medium 70 in the front-rear direction by the medium conveyance unit 36, as necessary, to change the printing position with respect to the medium 70 in the front-rear direction, and thereafter, executes printing on the medium 70 again in the left-right direction.

When the shape of the two-dimensional printed matter is different from the shape of the medium 70, the operator prints the two-dimensional printed matter on the medium 70 on the basis of the print data based on the two-dimensional data, and thereafter, cuts out the two-dimensional printed matter from the medium 70.

After the process of S103, the operator instructs the computer 20 through the operation unit 21 to cause the three-dimensional printer 50 to generate a three-dimensional shaped object based on the shaping data based on the three-dimensional data generated in S102 (S104). Therefore, the control unit 25 of the computer 20 generates shaping data based on the three-dimensional data generated in S102, and transmits the shaping data to the three-dimensional printer 50. Then, the three-dimensional printer 50 generates a three-dimensional shaped object based on the shaping data transmitted from the computer 20.

Here, generation of a three-dimensional shaped object by the three-dimensional printer 50 will be described.

Upon receiving the shaping data through the communication unit 62, the control unit 64 of the three-dimensional printer 50 shapes the three-dimensional shaped object based on the shaping data received through the communication unit 62. That is, the control unit 64 moves the carriage 52 in the left-right direction by the carriage scanning unit 57 to eject ink toward the shaping table 51 by the inkjet head 53, and irradiates the ink attached to the shaping table 51 or the ink layer on the shaping table 51 with light from the ultraviolet irradiator 55 to execute printing of the ink layer in the left-right direction. Furthermore, when the printing of the ink layer in the left-right direction is executed, the control unit 64 moves the shaping table 51 in the front-rear direction by the shaping table moving unit 56 as necessary, thus changing the position of printing with respect to the shaping table 51 or the ink layer on the shaping table 51 in the front-rear direction and, thereafter, executing again the printing of the ink layer in the left-right direction. When the printing of the ink layer is executed, the control unit 64 controls the roller rotation driving unit 58 and the roller movement driving unit 59 so as to remove the unnecessary ink on the surface of the ink layer by the flattening roller 54 to flatten the ink layer. When the printing of the specific ink layer is executed, the control unit 64 moves the shaping table 51 to the lower side in the vertical direction by the shaping table moving unit 56, as necessary, and then again executes printing of the ink layer on the ink layer.

After the process of S104, the operator creates a three-dimensional object by attaching the two-dimensional printed matter generated in S103 inside the attachment groove of the three-dimensional shaped object formed in S104 (S105), and terminates the three-dimensional object manufacturing method shown in FIG. 8.

In the above description, the process of S103 is executed before the process of S104. However, either the process of S103 or the process of S104 may be executed first or the processes may be executed simultaneously.

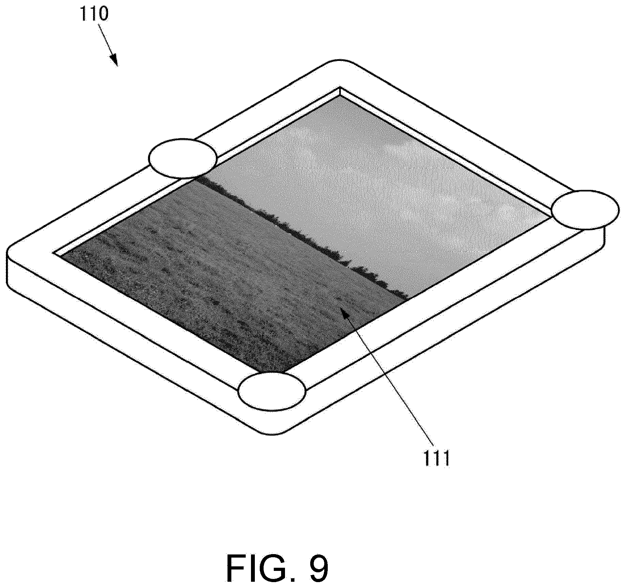

FIG. 9 is an external perspective view of an example of a three-dimensional object 110 represented by three-dimensional data used in the three-dimensional object manufacturing method shown in FIG. 8.

As shown in FIG. 9, the three-dimensional object 110 has an image 111 appearing on the surface.

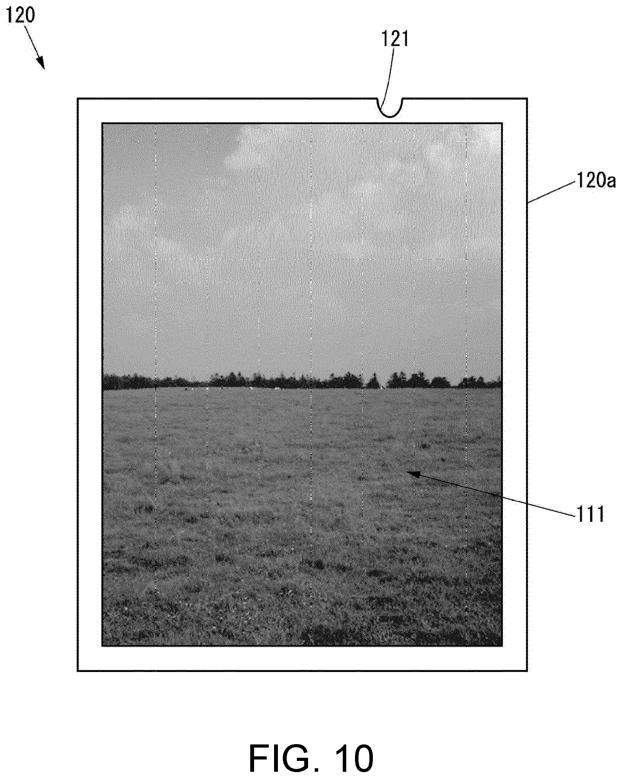

FIG. 10 is a front view of an example of a two-dimensional printed matter 120 generated based on the three-dimensional data of the three-dimensional object 110 (see FIG. 9).

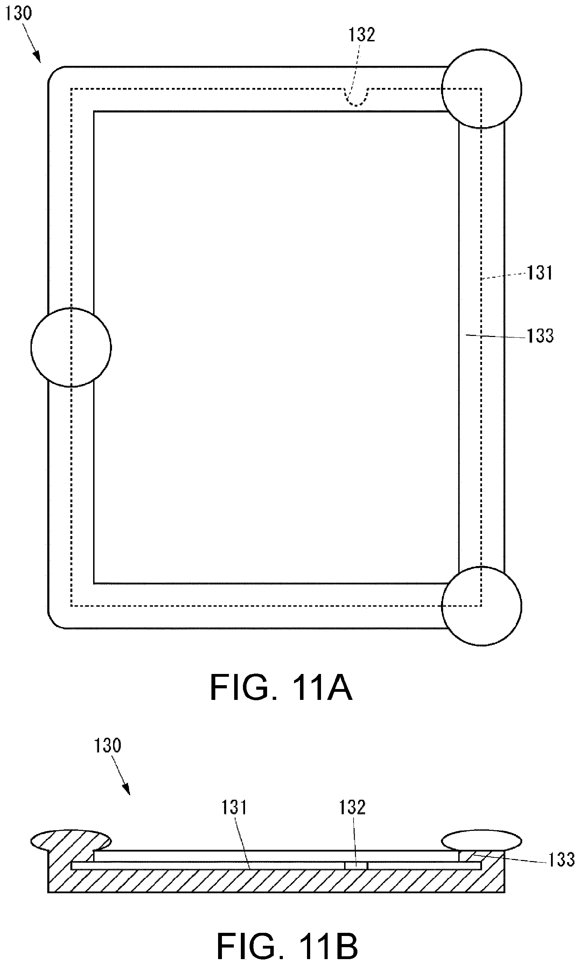

As shown in FIG. 10, the two-dimensional printed matter 120 is that in which an image 111 is printed on the medium 70 (see FIG. 3). The two-dimensional printed matter 120 includes a positioning portion 121 having a shape corresponding to a shape of a positioning portion 132 (see FIG. 11A and FIG. 11B) of a three-dimensional shaped object 130 (see FIG. 11A and FIG. 11B) described below. The shape of the positioning portion 121 is, for example, a shape of a notch.

FIG. 11A is a plan view of an example of the three-dimensional shaped object 130 generated based on the three-dimensional data of the three-dimensional object 110 (see FIG. 9). FIG. 11B is a front cross-sectional view of the three-dimensional shaped object 130 shown in FIG. 11A.

As shown in FIG. 11A and FIG. 11B, the three-dimensional shaped object 130 includes an attachment groove 131, which is a groove for interiorly attaching the two-dimensional printed matter 120 (see FIG. 10), a positioning portion 132 having a shape that corresponds to the shape of the positioning portion 121 (see FIG. 10) of the two-dimensional printed matter 120 for positioning the two-dimensional printed matter 120 with respect to the attachment groove 131, and an end cover portion 133 that covers an end 120a (see FIG. 10) which is an outline of the two-dimensional printed matter 120 attached inside the attachment groove 131. The shape of the positioning portion 132 is, for example, a shape of a protrusion.

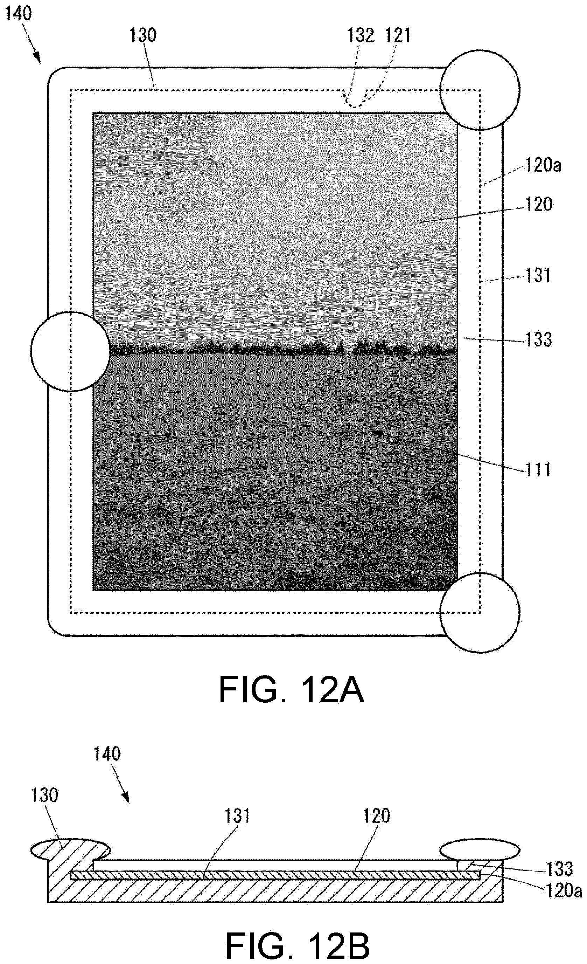

FIG. 12A is a plan view of a three-dimensional object 140 generated by attaching the two-dimensional printed matter 120 shown in FIG. 10 to the inside of the attachment groove 131 of the three-dimensional shaped object 130 shown in FIG. 11A and FIG. 11B. FIG. 12B is a front cross-sectional view of the three-dimensional object 140 shown in FIG. 12A.

In the three-dimensional object 140 shown in FIG. 12A and FIG. 12B, the two-dimensional printed matter 120 may be attached to the three-dimensional shaped object 130 with an adhesive, or may simply be fitted into the attachment groove 131. Note that the three-dimensional object 140 shown in FIG. 12A and FIG. 12B has almost the same outer appearance as the three-dimensional object 110 shown in FIG. 9.

In the three-dimensional object 140, the end 120a of the two-dimensional printed matter 120 is an engagement portion that engages with the attachment groove 131 of the three-dimensional shaped object 130 in a positioning state, and forms a printed matter side engagement portion of the present disclosure. Similarly, in the three-dimensional object 140, the attachment groove 131 of the three-dimensional shaped object 130 is an engagement portion that engages with the end 120a of the two-dimensional printed matter 120 in a positioning state, and forms a shaped object side engagement portion of the present disclosure. The attachment groove 131 of the three-dimensional shaped object 130 engages with the end 120a of the two-dimensional printed matter 120, so that the position of the two-dimensional printed matter 120 with respect to the three-dimensional shaped object 130 in both directions, a plane direction and an orthogonal direction that is orthogonal to the plane direction, is positioned. Here, the plane direction is the extending direction of the two-dimensional printed matter 120.

The attachment groove 131 of the three-dimensional shaped object 130 has a shape that lies along the entire periphery of the outline of the two-dimensional printed matter 120, and is formed in a shape in which the entire periphery of the outline of the two-dimensional printed matter 120 is hidden inside the attachment groove 131 when the three-dimensional object 140 is viewed from an orthogonal direction orthogonal to the plane direction as shown in FIG. 12A.

As described above, the three-dimensional object manufacturing method of the present disclosure generates, the two-dimensional printed matter 120 in which the image 111 appearing on the surface of the three-dimensional object 110 is printed on the medium 70 by the two-dimensional printer 30, generates the three-dimensional shaped object 130 including the attachment groove 131 for interiorly attaching the two-dimensional printed matter 120 by the three-dimensional printer 50, and attaches the two-dimensional printed matter 120 inside the attachment groove 131 of the three-dimensional shaped object 130 to generate the three-dimensional object 140, so that the image quality of the image 111 appearing on the surface of the three-dimensional object 140 can be improved as compared with a case where the entire three-dimensional object 110 is generated by the three-dimensional printer 50. That is, the three-dimensional object manufacturing method of the present disclosure can obtain the three-dimensional object 140 on which the image 111 is printed with the number of colors and resolution that cannot be expressed when the three-dimensional object 110 is shaped in full color by the three-dimensional printer 50.

Note that the two-dimensional printed matter 120 may not be that in which the entire image 111 appearing on the surface of the three-dimensional object 110 is printed on the medium 70. That is, the two-dimensional printed matter 120 may be that in which a part of the image 111 appearing on the surface of the three-dimensional object 110 is printed on the medium 70. Among the image 111 appearing on the surface of the three-dimensional object 110, the image included in the two-dimensional printed matter 120 may be an image appearing on the flat surface of the three-dimensional object 110 or may be an image appearing on the curved surface of the three-dimensional object 110.

The three-dimensional object manufacturing method of the present disclosure can position the two-dimensional printed matter 120 with respect to the attachment groove 131 of the three-dimensional shaped object 130 by the positioning portion 132 of the three-dimensional shaped object 130, and thus the two-dimensional printed matter 120 can be easily positioned with respect to the attachment groove 131 of the three-dimensional shaped object 130. In the three-dimensional object manufacturing method according to the present disclosure, the three-dimensional shaped object 130 may not include the positioning portion 132.

The three-dimensional object manufacturing method of the present disclosure can suppress the lowering of the designability of the three-dimensional object 140 by the end 120a of the two-dimensional printed matter 120 being visually recognized since the end 120a of the two-dimensional printed matter 120 is covered by the end cover portion 133 of the three-dimensional shaped object 130, that is, the entire periphery of the outline of the two-dimensional printed matter 120 is hidden inside the attachment groove 131 of the three-dimensional shaped object 130. The end cover portion 133 of the three-dimensional shaped object 130 does not need to cover the entire end 120a of the two-dimensional printed matter 120. That is, the end cover portion 133 of the three-dimensional shaped object 130 may cover a part of the end 120a of the two-dimensional printed matter 120. Furthermore, in the three-dimensional object manufacturing method of the present disclosure, the three-dimensional shaped object 130 does not need to include the end cover portion 133.

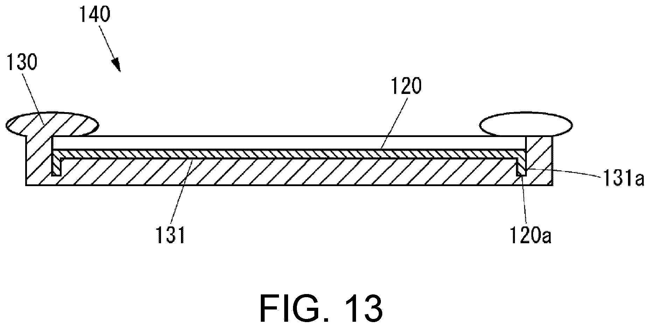

The shapes of the two-dimensional printed matter 120 and the attachment groove 131 may be shapes other than the shapes shown in FIG. 12A and FIG. 12B. For example, the shapes of the two-dimensional printed matter 120 and the attachment groove 131 may be the shapes shown in FIG. 13.

FIG. 13 is a front cross-sectional view of an example different from the example shown in FIG. 12A and FIG. 12B of the three-dimensional object 140 generated by attaching the two-dimensional printed matter 120 inside the attachment groove 131 of the three-dimensional shaped object 130.

The attachment groove 131 of the three-dimensional shaped object 130 shown in FIG. 13 has grooves 131a at both ends into which the ends 120a of the two-dimensional printed matter 120 are inserted. Therefore, the two-dimensional printed matter 120 is attached inside the attachment groove 131 by bending the part on the end 120a side and inserting the bent part into the groove 131a.

In the present embodiment, the shaped object side engagement portion of the present disclosure is the attachment groove 131, but may not be a groove as long as the engagement portion engages with the printed matter side engagement portion of the two-dimensional printed matter 120 in a positioning state.

After the two-dimensional printed matter 120 is detached, the three-dimensional shaped object 130 may be reused by attaching a two-dimensional printed matter other than the two-dimensional printed matter 120 to the inside of the attachment groove 131.

In the present embodiment, the two-dimensional data for the two-dimensional printed matter and the three-dimensional data of the three-dimensional shaped object that forms the three-dimensional object by attaching the two-dimensional printed matter are generated based on the three-dimensional data of the three-dimensional object. However, the two-dimensional data for the two-dimensional printed matter and the three-dimensional data of the three-dimensional shaped object forming the three-dimensional object by attaching the two-dimensional printed matter may be generated in a state where the three-dimensional data of the three-dimensional object does not exist.

In the present embodiment, the two-dimensional printer 30 conveys the medium 70 in the front-rear direction with respect to the platen 31 to move the medium 70 in the front-rear direction with respect to the inkjet head 34. However, as the two-dimensional printer 30 includes a mechanism that extends the platen 31 in the front-rear direction from that shown in FIG. 3 to obtain a so-called flatbed type printer, and moves the guide rail 32 and the carriage 33 in the front-rear direction with respect to the platen 31, so that the inkjet head 34 may be moved in the front-rear direction with respect to the medium 70.

### [REFERENCE SIGNS LIST]

30: two-dimensional printer
50: three-dimensional printer
70: medium
110: three-dimensional object
111: image
120: two-dimensional printed matter
120a: end (printed matter side engagement portion, outline)
130: three-dimensional shaped object
131: attachment groove (shaped object side engagement portion, groove)
132: positioning portion
133: end cover portion
140: three-dimensional object

## Claims

1. A three-dimensional object manufacturing method, **characterized in that**, the three-dimensional object manufacturing method comprising:
a data generating step (S102) of generating, based on three-dimensional data of a three-dimensional object (110, 140),
a two-dimensional data for a two-dimensional printed matter (120) in which at least a part of an image (111) appearing on a surface of the three-dimensional object (110, 140) is printed on a medium (70), and
a three-dimensional data of a three-dimensional shaped object (130) that includes a shaped object side engagement portion (131) serving as an engagement portion that engages with a printed matter side engagement portion (120a) serving as an engagement portion in the two-dimensional printed matter (120) in a positioning state and configures the three-dimensional object (110, 140) when the printed matter side engagement portion (120a) is engaged with the shaped object side engagement portion (131);
a two-dimensional printed matter generating step (S103) of generating the two-dimensional printed matter (120) by a two-dimensional printer (30) based on the two-dimensional data generated by the data generating step (S102);
a three-dimensional shaped object generating step (S 104) of generating the three-dimensional shaped object (130) by a three-dimensional printer (50) based on the three-dimensional data generated by the data generating step (S102); and
a three-dimensional object generating step (S 105) of generating the three-dimensional object (110, 140) by engaging the printed matter side engagement portion (120a) of the two-dimensional printed matter (120) generated by the two-dimensional printed matter generating step (S103) to the shaped object side engagement portion (131) of the three-dimensional shaped object (130) generated by the three-dimensional shaped object generating step (S104).

2. The three-dimensional object manufacturing method according to claim 1, wherein
when the shaped object side engagement portion (131) engages with the printed matter side engagement portion (120a), a position in at least one of a plane direction and an orthogonal direction orthogonal to the plane direction with respect to the three-dimensional shaped object (130) of the two-dimensional printed matter (120) is positioned.

3. The three-dimensional object manufacturing method according to claim 2, wherein
the shaped object side engagement portion (131) is a groove extending in parallel with the plane direction, and engages with the printed matter side engagement portion (120a) inside the groove.

4. The three-dimensional object manufacturing method according to claim 3, wherein
the groove (131) has a shape that lies along an entire periphery of an outline of the two-dimensional printed matter (120), and is formed in a shape in which the entire periphery of the outline is hidden inside the groove (131) when the three-dimensional object (110, 140) is viewed from the orthogonal direction.

5. The three-dimensional object manufacturing method according to any one of claims 1 to 4, wherein
the three-dimensional shaped object (130) includes a positioning portion (132) having a shape that corresponds to a shape of at least a part of the shape of the two-dimensional printed matter (120) for positioning the printed matter side engagement portion (120a) with respect to the shaped object side engagement portion (131).

6. The three-dimensional object manufacturing method according to any one of claims 1 to 5, wherein
the three-dimensional shaped object (130) includes an end cover portion (133) that covers at least a part of an end of the two-dimensional printed matter (120) in which the printed matter side engagement portion (120a) is engaged with the shaped object side engagement portion (131).

7. A three-dimensional object (110, 140) comprising:
a two-dimensional printed matter (120) in which at least a part of an image (111) appearing on a surface of the three-dimensional object (110, 140) is printed on a medium (70); and
a three-dimensional shaped object (130) including a shaped object side engagement portion (131) serving as an engagement portion that engages with a printed matter side engagement portion (120a) serving as an engagement portion in the two-dimensional printed matter (120) in a positioning state, wherein
the two-dimensional printed matter (120) has the printed matter side engagement portion (120a) engaged with the shaped object side engagement portion (131), and
the three-dimensional shaped object (130) includes a positioning portion (132) having a shape that corresponds to a shape of at least a part of the two-dimensional printed matter (120) for positioning the printed matter side engagement portion (120a) with respect to the shaped object side engagement portion (131).
